# EUROPEAN PATENT APPLICATION

(11) **EP 1 374 665 A1**
(43) Date of publication of application: **02.01.2004**
(21) Application number: 02712473.4
(22) Date of filing: 25.02.2002
(51) Int. Cl.: A01G 7/00

(54) **METHOD OF CULTIVATING PLANT AND ILLUMINATOR FOR CULTIVATING PLANT**

(30) Priority: 28.02.2001 JP 2001054323
(71) Applicant: CCS Inc., Kyoto-shi, Kyoto 602-8011 (JP)
(72) Inventor: YONEDA, Kenji, Kamigyo-ku, Kyoto-shi, Kyoto 602-0933 (JP); MORI, Yasuhiro, Yokohama-shi, Kanagawa 236-0045 (JP)
(74) Representative: Kédinger, Jean-Paul
(86) International application number: PCT/JP2002/001640
(87) International publication number: WO 2002/067660

(57) **Abstract**

A plant cultivation method, wherein plants are cultivated by using means for irradiating pulsed light with a period of 2 µsec to 1 msec and a duty ratio (DT ratio) of 20 to 70%, using a light emitting diode that emits white light or two types of light of white and red as the light source, and a plant cultivation illuminator used therein.

## Description

### TECHNICAL FIELD

This invention relates to a method for cultivating plants and to an illuminator for cultivating plants, with which plants are activated by irradiating them with pulsed light from a light emitting diode so as to promote the photosynthesis reaction.

### BACKGROUND ART

Recent years have witnessed increasing practical application of large-scale plant growing systems that make use of artificial light sources, and which are less susceptible to the effects of external factors (such as long- and short-term weather conditions and insect damage). The most commonly-used light sources include high-pressure sodium lamps, low-pressure sodium lamps, xenon lamps, metal halide lamps, fluorescent lamps, and microwave lamps. Of these, high-pressure sodium lamps are the most popular because of their relatively high luminous efficiency.

Still, an artificial light source such as a high-pressure sodium lamp strikes a poor balance between red (wavelength band: 640 to 690 nm) and blue (wavelength band: 420 to 470 nm), which is important for photosynthesis and so forth, and therefore the output had to be raised in order to cultivate healthy plants. Furthermore, low-pressure sodium lamps have higher luminous efficiency than high-pressure sodium lamps, but pose problems with optical quality because they output single-wavelength light of the sodium D line, and it is also difficult to raise the output.

Another problem with an artificial light source such as this is that the large amount of heat radiated imposes a heavy load on air-conditioning units, and the plants have to be kept sufficiently far away from the light source in order to keep them from being damaged by this thermal radiation, and this tends to result in a bulkier apparatus.

In view of the above problems, artificial light sources that make use of light emitting diodes (LEDs) have come to be used in recent years. With light emitting diodes, there is less load on air-conditioning equipment because elements with a light emitting wavelength band that does not include heat rays can be employed, and the apparatus can also be made more compact, so luminous efficiency is better. Another advantage is that the life of a light emitting diode is several times longer than that of a high-pressure sodium lamp. Also, the shape of the illuminator can be flexibly and easily modified according to the plants being illuminated, and the light emitting density easily controlled, by arranging numerous light emitting diodes in a linear or planar array.

Another advantage of using light emitting diodes is that irradiation with pulsed light is possible.

For example, page 88 of "Plant Factories -Theory and Practice," written by Masamoto Takatsuji, discusses the light directed at plants, and states that when light is pulsed (emitted intermittently, so that there is a dark period), the amount of photosynthesis per unit of light can be increased over that achieved with continuous light, without optical saturation occurring even under intense light.

It is stated on page 153 of the Blue Backs [*sic*] of "The World of Photosynthesis," by Yozo Iwanami (Kodansha), that the utilization efficiency of light is better with short-period pulsed light than with continuous light, and people have begun thinking of light emitting diodes for use in plant cultivation.

Nevertheless, although it was known in the past that the growth of plants could be accelerated by pulsing light emitting diodes to intermittently illuminate plants and achieve a good balance between photoperiods and dark periods for the plants as discussed above, it was unclear exactly which configuration would be more effective, and there was also a limit to how much plants could be activated.

It is an object of the present invention to provide a plant cultivation method and an illuminator for cultivating plants, with which the photosynthesis reaction can be promoted by achieving the optimal intermittent illumination with light emitting diodes (pulsed illumination) while also keeping cost and size to a minimum.

### DISCLOSURE OF THE INVENTION

With the plant cultivation method and illuminator for cultivating plants pertaining to the present invention, plants are cultivated by being irradiated with pulsed light with a period of 2 µsec to 1 msec and a duty ratio (DT ratio) of 20 to 70%, using a light emitting diode that emits white light, or a light emitting diode that emits two types of light, white and red, as the light source.

In other words, the experiment results discussed below revealed that using the above-mentioned light emitting diode is advantageous in terms of both growth efficiency and nutrient content.

Furthermore, when intermittent pulsed light is used instead of continuous light, power consumption and thermal radiation can both be reduced, while growth efficiency can be enhanced. The "duty ratio" referred to here is the ratio of the photoperiod to the [overall] period. For instance, if the [overall] period is 100 psec and the photoperiod is 50 µsec, then 50 ÷ 100 = 0.5, and this value is multiplied by 100 to obtain 50%.

"Experimental Cultivation of Leaf Lettuce with Laser Light," by Yasuhiro Mori and Masamoto Takatsuji (pp. 7-12, published in the Journal of SHITA (Japanese Society of High Technology in Agriculture)), gives the following explanation: "Since plants photosynthesize and grow by using a broad range of wavelengths from 420 to 730 nm, using wavelengths of a continuous spectrum having a number of peaks, as is the case with a white LED, allows the light to be utilized more efficiently than when a single wavelength is used."

Of all the above-mentioned wavelengths, photosynthesis is most active under components of blue light from 420 to 470 nm and red light from 640 to 690 nm, which are the absorption peaks of chlorophyll. (Photosynthesis refers to the reaction that occurs when light is absorbed by chlorophyll.)

Unlike other LEDs, the above-mentioned white LED has the wavelengths necessary for plants in a nicely continuous spectrum, but the red component may be somewhat lacking for some plant varieties. In view of this, the [red] ratio is increased by adding 660 nm red, which is the absorption peak for chlorophyll a, which promotes photosynthesis and improves growth.

The reason for this improvement with pulsed light seems to be that when red is added, photosynthesis is faster than with white light alone, and pulsed irradiation allows electrons to flow more efficiently and raises the photosynthesis rate per unit of light quantity. (There is a rate-determining factor in the reaction route of the electron transfer system of photosynthesis, and when the photosynthesis rate rises, electrons do not flow as smoothly and growth is slower.)

The above-mentioned rate-determining factor has been described in "Progress in Photosynthesis-Light Reaction Research, UP Biology," by Hiroshi Fujishige (pp. 121-124, published by Tokyo University Publishing).

As discussed above, when the photosynthesis rate increases, more electrons flow and photosynthesis becomes more active, but once a certain amount is exceeded (when the light is more intense or the electrons flow faster), the flow of electrons is impeded because of the rate-determining factor mentioned above.

Because of all this, in the present invention light is used at a certain pulse interval, which allows the electrons to flow more smoothly, eliminates wasted light, and results in better plant growth. Furthermore, in addition to white light that has a continuous spectrum, the light source also includes extra red light that allows the photosynthesis rate to be raised, which further promotes growth. The ratio of white light and red light may be set as desired, as long as the red light is at least 5% with respect to the white light.

### BRIEF DESCRIPTION OF THE DRAWINGS

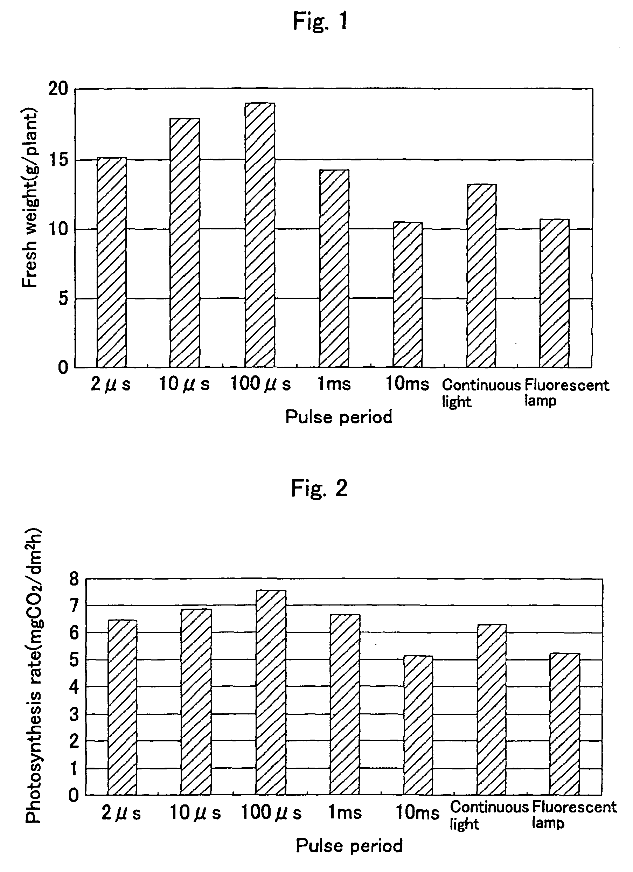

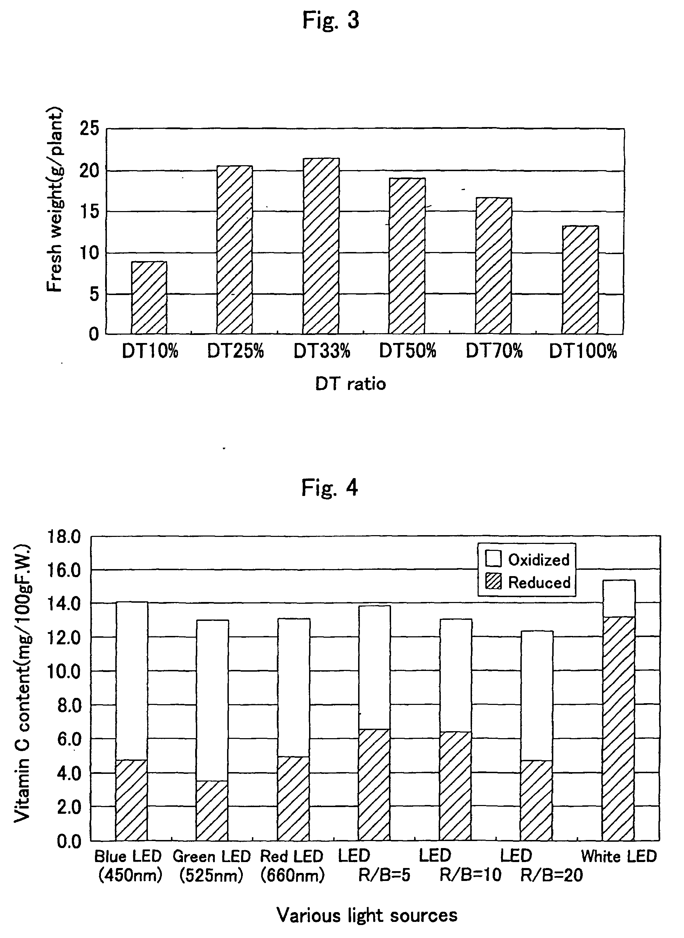

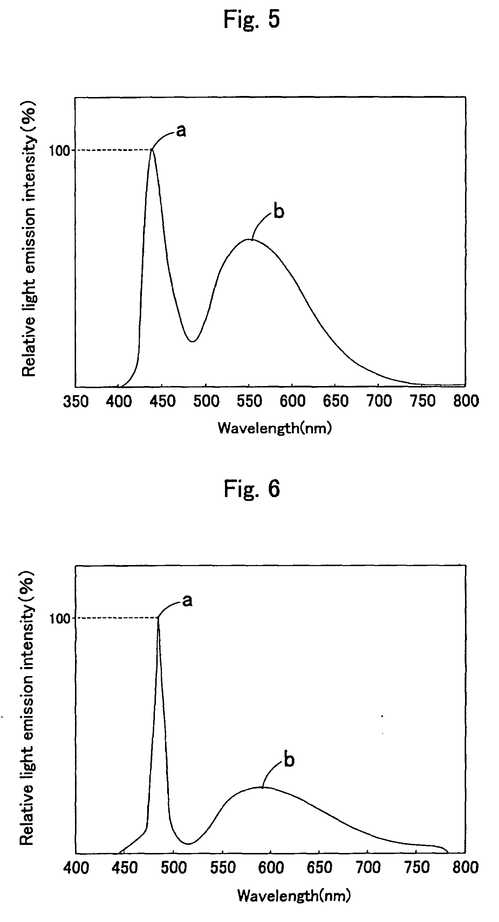

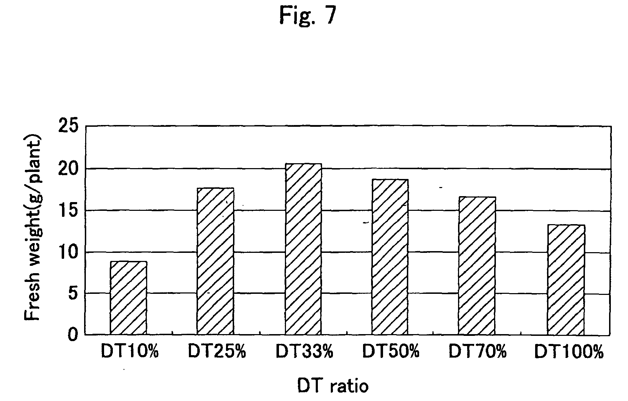

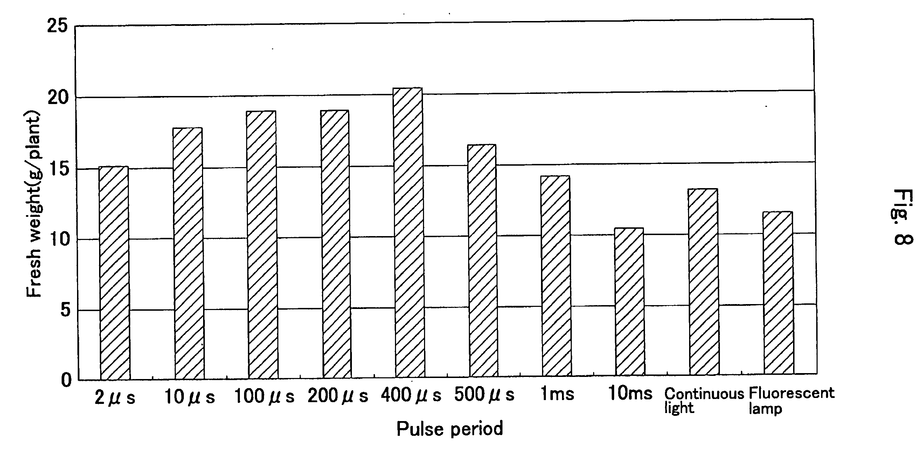

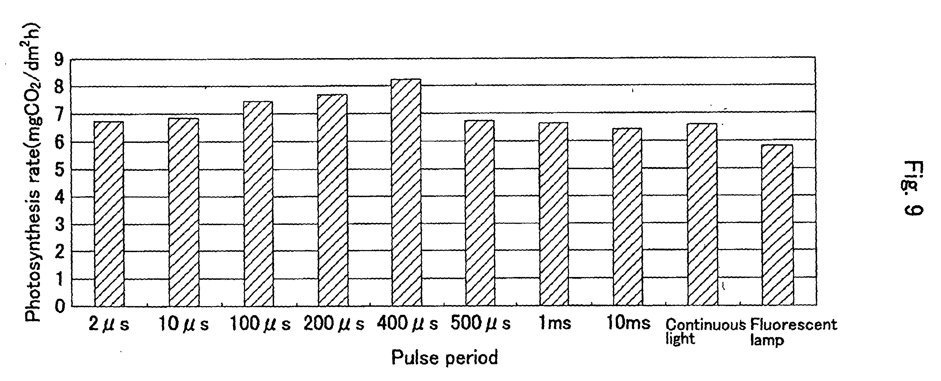

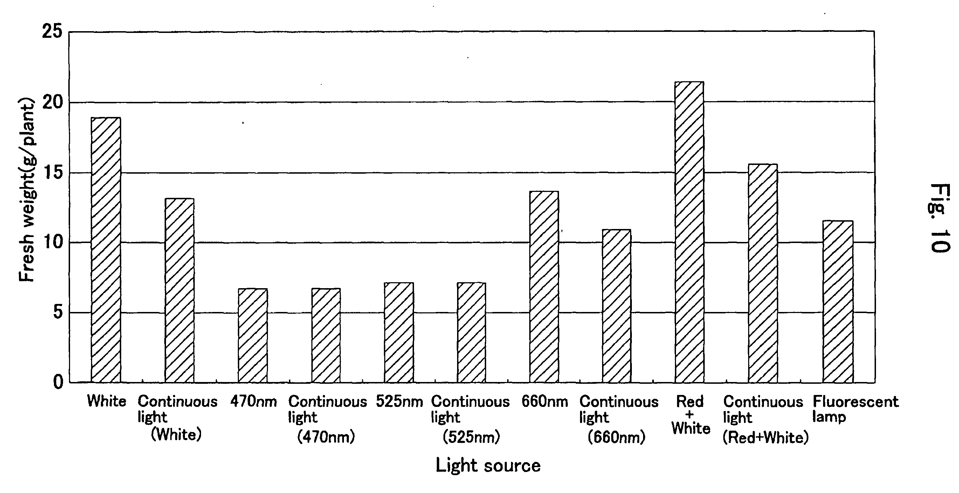

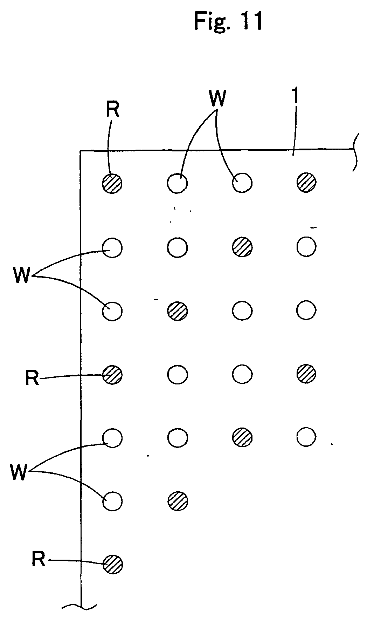

Fig. 1 is a graph of the relationship between pulse period and fresh weight when the DT ratio was 50% and a white light source was used. Fig. 2 is a graph of the relationship between pulse period and photosynthesis rate when the DT ratio was 50% and a white light source was used. Fig. 3 is a graph of the relationship between DT ratio and fresh weight when the pulse period was 100 psec and a white light source was used. Fig. 4 is a graph of the relationship between vitamin C and various light sources. Fig. 5 is a graph of the light emitting spectrum of a GaN white LED. Fig. 6 is a graph of the light emitting spectrum of a ZnSe white LED. Fig. 7 is a graph of the relationship between DT ratio and fresh weight when the pulse period was 100 psec and white and red light sources were used. Fig. 8 is a graph of the relationship between pulse period and fresh weight when the DT ratio was 50% and white and red light sources were used. Fig. 9 is a graph of the relationship between pulse period and photosynthesis rate when the DT ratio was 50% and white and red light sources were used. Fig. 10 is a graph of the relationship between fresh weight and various light sources. Fig. 11 is a front view illustrating part of a light source in which white LEDs and red LEDs are installed on a substrate.

### BEST MODE FOR CARRYING OUT THE INVENTION

Examples of the present device will now be described through reference to the drawings.

The basic system used to obtain white light may be either a system in which light emitting diode (hereinafter referred to as LED) of three colors comprising red, green, and blue (R, G, B) are lit simultaneously, or in which LED of two colors comprising blue-green and yellow-orange are lit simultaneously, or a system in which a light emitting diode that radiates blue or purple light is used as an excitation light source for exciting a fluorescent material. For instance, Fig. 5 shows the light emitting spectrum of a GaN white LED, while Fig. 6 shows the light emitting spectrum of a ZnSe white LED. In Fig. 5, the peak point a of blue light is at approximately 440 nm, and the peak point b of yellow light radiated from a YAG fluorescent material is at approximately 550 nm, whereas the light emission peak points a and b of blue and yellow are both shifted toward the long wavelength side in Fig. 6. Also, while not shown, a white LED that makes use of ZnS, ZnO, or AlN may be used instead. In short, it is best to use an LED with a high optical conversion efficiency and a long service life. It is preferable for white light to be emitted with a white LED because a smooth, continuous spectrum can be obtained more often than when white light is emitted using LEDs of no less than two colors as mentioned above.

As to the plants to be grown under illumination from the above-mentioned light emitting diodes, [the present invention] is very effective on leafy vegetables such as leaf lettuce or head lettuce, as well as aquatic plants and others, but can also be used on other plants.

### Example 1 (white only)

White bullet (or chip) LED lamps were arranged in a 10 × 20 grid (20 vertical rows each comprising 10 LED lamps laid out at suitable intervals substantially on a line were arranged substantially in parallel) over an area of 15 × 12 cm on a printed substrate. This was connected to a power supply and a pulse generator, and leaf lettuce was cultivated.

The DT ratio was set at 50%, the pulse period was 2 µsec, 10 psec, 100 psec, or 1 msec, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the plants were weighed and the photosynthesis rate and vitamin C content were measured, the results of which are given in Figs. 1, 2, and 4, respectively (the vitamin C content remained substantially constant regardless of the pulse period, and the values are compiled above "white LED").

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

### Example 2 (white only)

White bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 100 µsec, the DT ratio was 25%, 33%, 50%, or 70%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the plants were weighed and the photosynthesis rate and vitamin C content were measured, the results of which are given in Figs. 3 and 4, respectively (the vitamin C content remained substantially constant regardless of the DT ratio, and the values are compiled above "white LED").

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

### Comparative Example 1 (continuous light (DT 100%) and DT 10%)

White bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 100 µsec, the DT ratio was 10% or 100%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the plants were weighed and the photosynthesis rate and vitamin C content were measured, the results of which are given in Figs. 3 and 4, respectively (the vitamin C content remained substantially constant regardless of the DT ratio, and the values are compiled above "white LED").

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

### Comparative Example 2 (period of 10 msec)

White bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 10 msec, the DT ratio was 50%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the plants were weighed and the photosynthesis rate and vitamin C content were measured, the results of which are given in Figs. 1, 2, and 4 (see "white LED"), respectively.

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

Next, a comparative example of the vitamin content will be given.

### Comparative Example 3 (red)

Red bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 100 psec (this was the pulse period that yielded the best data for fresh weight and photosynthesis rate with the white LEDs), the DT ratio was 50%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the vitamin C content was measured, the results of which are given in Fig. 4 (one cycle lasted one day, the irradiation time during one cycle was 17 hours, the non-irradiation time was 7 hours, and irradiation lasted 14 days). The fresh weight and photosynthesis rate are given in Table 1, while the vitamin C content is given in Fig. 4.

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

**Table 1**

| | Red | Blue | Green |
|---|---|---|---|
| Fresh weight (g/plant) | 10.85 | 6.53 | 6.82 |
| Photosynthesis rate (mg CO₂/dm²h) | 4.85 | 5.37 | 3.54 |

### Comparative Example 4 (blue)

Blue bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 100 psec (this was the pulse period that yielded the best data for fresh weight and photosynthesis rate with the white LEDs), the DT ratio was 50%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the vitamin C content was measured, the results of which are given in Fig. 4 (one cycle lasted one day, the irradiation time during one cycle was 17 hours, the non-irradiation time was 7 hours, and irradiation lasted 14 days). The fresh weight and photosynthesis rate are given in Table 1.

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

### Comparative Example 5 (green)

Green bullet LED lamps were arranged in a 10 × 20 grid in the same manner as above over an area of 15 × 12 cm on a printed substrate. This was connected to a power supply and a pulse generator, and leaf lettuce was cultivated.

The pulse period was 100 µsec (this was the pulse period that yielded the best data for fresh weight and photosynthesis rate with the white LEDs), the DT ratio was 50%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the vitamin C content was measured, the results of which are given in Fig. 4 (one cycle lasted one day, the irradiation time during one cycle was 17 hours, the non-irradiation time was 7 hours, and irradiation lasted 14 days). The fresh weight and photosynthesis rate are given in Table 1.

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

### Comparative Example 6 (R/B ratio 5 to 20)

Red bullet LED lamps were arranged in a 10 × 10 grid and blue bullet LED lamps were arranged in a 10 × 10 grid in the same manner as above over an area of 15 × 12 cm on a printed substrate. This was connected to a power supply and a pulse generator, and leaf lettuce was cultivated while the red bullet LED lamps and blue bullet LED lamps were flashed such that the R/B ratio would be 5, 10, or 20.

The pulse period was 100 psec, the DT ratio was 50%, and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and after 14 days of cultivation the vitamin C content was measured, the results of which are given in Fig. 4 (one cycle lasted one day, the irradiation time during one cycle was 17 hours, the non-irradiation time was 7 hours, and irradiation lasted 14 days).

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

The above-mentioned vitamin C (ascorbic acid) content was found by measuring the total ascorbic acid content and the reduced ascorbic acid content by the following method, and then calculating the amount of oxidized ascorbic acid from the difference between the above two amounts.

The samples were adjusted by the following method for quantitative measurement.

0.5 g of leaf lettuce cultivated under irradiation from the various light sources discussed above was fixed with 5 mL of 5% trichloroacetic acid (TCA), pulverized in a homogenizer, and centrifuged for 5 minutes at 4°C and 12,000 rpm in a centrifuge the utilizes centrifugal force to separate according to differences in density. The separated supernatant was used as the sample for quantifying the reduced ascorbic acid and total ascorbic acid.

A total of 5 mL of reduced ascorbic acid was used, obtained by diluting a sample 10 times with 5% TCA, and successively adding to 1 mL of this product 1 mL of 5% TCA, 1 mL of ethanol, 0.5 mL of a 0.4% phosphoric acid solution diluted with ethanol, 1 mL of 0.5% 4,7-diphenyl-1,10-phenanthroline (bathophenanthroline, BP) diluted with ethanol, and 0.5 mL of 0.3% iron chloride diluted with ethanol.

The system was allowed to stand for 90 minutes at 30°C, after which the absorbancy at 534 nm was measured with a spectrophotometer, and the amount of reduced ascorbic acid was found from a calibration curve produced using a standard sample (L(+) ascorbic acid).

For the total amount of ascorbic acid, a sample was diluted 10 times with 5% TCA, and to 1 mL of this product were added first 0.5 mL of 0.06% dithiotreitol (DTT) diluted with ethanol, and then 1 mL of sodium hydrogenphosphate adjusted to 1.2 N by the addition of sodium hydroxide, thereby adjusting the pH [of the sample] to between 7 and 8. The system was allowed to stand for 10 minutes at room temperature in order to reduce the oxidized ascorbic acid. After this, 0.5 mL of 0.24% N-ethylmaleimide (NEM) diluted with ethanol was added in order to halt any excessive reaction of the reductant, and the pH was adjusted to between 1 and 2 with 0.5 mL of 20% TCA. After reduction, everything else was carried out in the same manner as in the measurement of the reduced ascorbic acid content.

Let us now consider the results of the above examples and comparative examples. First, the results for fresh weight in Fig. 1 were better when the white LEDs [were pulsed] for 2 psec to 1 msec than with continuous light or light from a fluorescent lamp, except when the pulse period was 10 msec, at a DT ratio of 50%. Similarly, the results for photosynthesis rate (when the DT ratio was 50%) were also better when the white LEDs [were pulsed] for 2 psec to 1 msec than with continuous light or light from a fluorescent lamp, except when the pulse period was 10 msec.

As shown in Fig. 3, the results for fresh weight were better when the DT ratio (at a pulse period of 100 µsec) was 25% to 70% (there is no data for 20%, but it can be inferred from Fig. 3 that the data would tend to be good for 20% as well) than when it was 100% (continuous light).

The best data for vitamin C data was obtained with the white LEDs.

The red, blue, and green LED lamps in Table 1 did not produce results for fresh weight and photosynthesis rate that were as good as those obtained with a white lamp.

Virtually no moss growth was noted on the leaf lettuce cultivation trays irradiated with white LED lamps, but considerable moss growth was seen on the leaf lettuce cultivation trays irradiated with LED lamps other than white.

Figs. 1 to 3 show data for when leaf lettuce was cultivated using LED lamps that emitted white light, but Figs. 7 to 10 show data for when leaf lettuce was cultivated using a mixture of white light from LED lamps that emitted white light, and red light from LED lamps that emitted red light. As shown in Fig. 11, 18 LED lamps (only some of which are shown in Fig. 11) were arranged at specific intervals horizontally and vertically on a printed substrate 1, so that a total of 324 LED lamps were provided. Of these 324 LED lamps, 108 were LED lamps R that emitted red light, and 216 were LED lamps W that emitted white light, so that the ratio of red LED lamps R to white LED lamps W was approximately 33.3:66.7 (assuming the total to be 100), but this ratio can be varied as dictated by the plants in question. The light source thus constituted was connected to a power supply and a pulse generator as mentioned above.

The pulse period was set at 100 psec, the DT ratio was set at 10%, 25%, 33%, 50%, 70%, or 100% (continuous light), and the photon flux density on the cultivation tray plane was adjusted to 50 µmol·m⁻²s⁻¹.

The cultivation was performed with a hydroponic apparatus in an environment of 22°C, 70% RH, and a CO₂ concentration of 400 ppm, and the fresh weight after 14 days of cultivation is shown in Fig. 7.

The DT ratio was set at 50%, the pulse period was set at 2 ps, 10 ps, 100 µs, 200 µs, 400 µs, 500 µs, 1 ms, or 10 ms, the photon flux density on the cultivation tray plane was adjusted to 50 µmol·m⁻²s⁻¹, and the fresh weight was measured, the results of which are given in Fig. 8.

The DT ratio was set at 50%, the pulse period was set at 2 µs, 10 ps, 100 ps, 200 µs, 400 µs, 500 ps, 1 ms, or 10 ms, the photon flux density on the cultivation tray plane was adjusted to 50 µmol·m⁻²s⁻¹, and the photosynthesis rate was measured, the results of which are given in Fig. 9.

As a comparative example, the pulse period was set at 100 µs, the DT ratio was set at 50%, and the photon flux density on the cultivation tray plane was adjusted to 50 µmol·m⁻²s⁻¹ using a total of 11 types of light as light sources, consisting of five types of light comprising white light, blue light (470 nm), green light (525 nm), red light (660 nm), and a combination of red light and white light, continuous light of each of these five types, and light from a fluorescent lamp as a comparative example, and the fresh weight was measured, the results of which are given in Fig. 10.

In Figs. 7 to 10, just as above, cultivation was performed with a hydroponic apparatus in an environment of 22°C, 70% RH, and a CO₂ concentration of 400 ppm, and after 14 days of cultivation, data was obtained for the various categories discussed above (one cycle consisted of 1 day, the irradiation time during one cycle was 17 hours, the non-irradiation time was 7 hours, and irradiation lasted 14 days).

The samples used for cultivation were produced as follows. Seeds were sown in a hydroponic urethane cube, and seedlings were grown for 12 days in a greenhouse (one cycle consisted of 1 day at 22°C with the photon flux density produced by irradiation with a fluorescent lamp adjusted to 150 µmol·m⁻²s⁻¹, the irradiation time during one cycle was 17 hours, the non-irradiation time was 7 hours, and irradiation lasted 12 days). In this case, leaf lettuce weighing about 2 g at the two-leaf stage was used.

Let us now consider the results in Figs. 7 to 10. First, just as with white light, with a mixture of white light and red light, the results for fresh weight were better when the DT ratio shown in Fig. 7 (at a pulse period of 100 µsec) was 25% to 70% (there is no data for 20%, but it can be inferred from Fig. 7 that the data would tend to be good for 20% as well) than when it was 100%. (continuous light).

Just as with white LEDs, the results were better when the pulse period (when the DT ratio was 50%) shown in Fig. 8 was 2 µsec to 1 msec than with continuous light or light from a fluorescent lamp, except at 10 µsec. The results were especially good between 10 µsec and 500 µsec, with the best results obtained at 400 µsec.

The results were also better when the photosynthesis rate (when the DT ratio was 50%) was between 2 µsec and 1 msec than with continuous light or light from a fluorescent lamp, except at 10 msec.

The results were also better when the light source was red light (660 nm), white light, continuous white light, a mixture of white light and red light, and a continuous mixture of white light and red light than with light from a fluorescent lamp. The results were best with a mixture of white light and red light, with the next best being white light, then a continuous mixture of white light and red light, then red light (660 nm), and finally continuous white light.

### INDUSTRIAL APPLICABILITY

The plant cultivation method and plant cultivation illuminator pertaining to the present invention offer the following effects.

Pulsed light from light emitting diodes is used, which is not only advantageous because the service life is longer and less heat is generated, but is also advantageous from a cost standpoint because plants can be cultivated with less power. Furthermore, there is no impediment to electron flow, allowing electrons to flow smoothly, so plants can be cultivated in a state in which no light is wasted.

Also, using light emitting diodes that emit white light allows plants with high nutritional value and an extremely large vitamin C content to be cultivated, and also allows the growth rate of the plants to be increased markedly.

Also, using light emitting diodes that emit white light allows moss growth to be kept to an absolute minimum.

Also, using light emitting diodes that emit white light is advantageous in terms of fresh weight and photosynthesis rate compared to using just white light, and is particularly advantageous when the plants are to be grown in a short time.

## Claims

1. A plant cultivation method, wherein plants are cultivated by using means for irradiating pulsed light with a period of 2 µsec to 1 msec and a duty ratio (DT ratio) of 20 to 70%, using a light emitting diode that emits white light as the light source.

2. A plant cultivation method, wherein plants are cultivated by using means for irradiating pulsed light with a period of 2 µsec to 1 msec and a duty ratio (DT ratio) of 20 to 70%, using a light emitting diode that emits two types of light, white and red, as the light source.

3. A plant cultivation illuminator, comprising means for irradiating pulsed light with a period of 2 µsec to 1 msec and a duty ratio (DT ratio) of 20 to 70%, using a light emitting diode that emits white light as the light source.

4. A plant cultivation illuminator, comprising means for irradiating pulsed light with a period of 2 µsec to 1 msec and a duty ratio (DT ratio) of 20 to 70%, using a light emitting diode that emits two types of light, white and red, as the light source.
